# EUROPÄISCHE PATENTANMELDUNG

(11) **EP 3 637 572 A1**
(43) Veröffentlichungstag der Anmeldung: **15.04.2020**
(21) Anmeldenummer: 19195521.0
(22) Anmeldetag: 05.09.2019
(51) Int. Cl.: H02J 3/00, H02J 3/14, H02J 3/32

(54) **VERFAHREN ZUM BETREIBEN EINES ELEKTRISCHEN ÜBERTRAGUNGSNETZES**

(30) Priorität: 12.10.2018 DE 102018125331
(71) Anmelder: Innogy SE, 45128 Essen (DE)
(72) Erfinder: Hermes, Dr. Roland, 45141 Essen (DE); Albers, Wiebke, 45130 Essen (DE); Noll, Dr. Theresa, 46236 Bottrop (DE)
(74) Vertreter: Cohausz & Florack

(57) **Zusammenfassung**

Verfahren zum Betreiben eines elektrischen Übertragungsnetzes (4), insbesondere eines Höchstspannungsnetzes, mit den Schritten: Empfangen jeweils einer Liste mit zumindest einem schaltbaren Teilnehmer von zumindest einem Verteilnetz für einem Netzübergabepunkt (16a-e) zwischen dem Verteilnetz und dem Übertragungsnetz (4), wobei einer jeweiligen Liste eine schaltbare elektrische Leistung zugeordnet ist, und Überprüfen eines Fahrplans für zumindest ein an das Übertragungsnetz (4) angeschlossenes Kraftwerk, wobei ein n-1 Kriteriums für das Übertragungsnetz (4) um die schaltbare Leistung der zumindest einen Liste ergänzt ist.

## Beschreibung

Der Gegenstand betrifft ein Verfahren zum Betreiben eines elektrischen Übertragungsnetzes, insbesondere eines Höchstspannungsnetzes.

Die elektrischen Stromnetze unterteilen sich in Übertragungsnetze (z.B. Höchstspannungsnetze) und Verteilnetze (z.B. Mittelspannungsnetze und Niederspannungsnetze). Das Übertragungsnetz bedient sich der Drehstrom-Hochspannungsübertragung oder der Gleichspannungs-Hochspannungsübertragung und überträgt die elektrische Leistung von Großkraftwerken an Leistungstransformatoren, welche die daran angeschlossenen Verteilnetze speisen. Den Übertragungsnetzen kommt somit entscheidende Bedeutung für die Stabilität der elektrischen Versorgung zu.

Sowohl der Ausbau erneuerbarer Energien als auch die Fortentwicklung auf der Verbraucherseite, z. B. durch die Sektorenkopplung, stellt die Netzentwicklung der Übertragungsnetzbetreiber vor Herausforderungen. Die Übertragungsnetzinfrastruktur muss für aktuelle und zukünftige Versorgungs- und Transportaufgaben ausreichend dimensioniert werden. Der dafür notwendige Netzausbau erfordert jedoch in der Regel den Bau neuer Überlandleitungen, welche zunehmend auf öffentlichen Widerstand stoßen. Daher ist ein wichtiges Ziel beim Netzausbau das NOVA-Prinzip (Reihenfolge der Maßnahmen: 1. Netzoptimierung, 2. Netzverstärkung 3. Netzausbau) zu befolgen, um die bestehende Netzinfrastruktur bestmöglich zu nutzen.

Für einen sicheren Betrieb des Übertragungsnetzes gilt jedoch bei der Netzplanung stets das N-1 Kriterium, so dass im ungestörten Normalbetrieb immer freie Übertragungskapazitäten vorliegen, für den Fall eines Betriebsmittelausfalls.

Das N-1 Kriterium besagt, dass bei Ausfall eines Betriebsmittels in dem Übertragungsnetz, beispielsweise eines Leistungstransformators, eines Generators oder einer Freileitung, der Gesamtbetrieb des restlichen Übertragungsnetzes unterbrechungsfrei aufrechterhalten bleiben muss ohne Überlastungen von anderen Betriebsmitteln. Das N-1 Kriterium muss für die jeweils in einem Zeitraum prognostizierte maximale Höchstlast erfüllt sein. Das Übertragungsnetz muss so ausgestattet sein, dass zu jedem Zeitpunkt das N-1 Kriterium eingehalten wird. Dies führt dazu, dass beispielsweise Leitungen im Normalbetriebsfall nur unterhalb der Nennleistung betrieben werden können, so dass bei Ausfall einer Leitung, beispielsweise durch einen Erdschluss oder einen Kurzschluss, die verbleibenden Leitungen die komplette Leistung tragen können und es dabei nicht zu einem Überschreiten deren Nennleistung kommt.

Diese redundante Auslegung beruht auf der Annahme, dass sich prognostizierte Lastflüsse nicht ad-hoc verändern lassen. Vielmehr liegt dem Netzausbau die Annahme zu Grunde, dass das Übertragungsnetz jeweils zu allen Lastzeiten, also auch zu Spitzenlastzeiten und bei einem Ausfall eines Betriebsmittels, diese Spitzenlast übertragen können muss.

Vor diesem Hintergrund lag dem Gegenstand die Aufgabe zu Grunde, die benötigten Betriebsmittel für einen Netzausbau eines Übertragungsnetzes zu reduzieren.

Diese Aufgabe wird durch ein Verfahren nach Anspruch 1 gelöst.

Gegenüber bisherigen Annahmen liegt dem gegenständlichen Verfahren die Erkenntnis zu Grunde, dass dem Übertragungsnetz für jeweils ein Verteilnetz an einem Netzübergabepunkt zwischen Übertragungsnetz und dem jeweiligen Verteilnetz eine schaltbare Leistung angeboten werden kann, welche in nahezu Echtzeit geschaltet werden kann. Eine dadurch bedingte erhebliche ad-hoc Änderung von Einspeisungen und Lasten kann auch schnell zu unzulässigen Arbeitspunkten im Verteilnetz führen kann. Dies wird gegenständlich vermieden, in dem der Verteilnetzbetreiber durch entsprechende Auswahlverfahren, bevorzugt zyklisch Listen mit schaltbaren Teilnehmern ersetzt und bereithält.

Der Verteilnetzbetreiber kann eine Liste mit schaltbaren Teilnehmern zur Verfügung stellen, welche sich unmittelbar schalten lassen, beispielsweise im Rahmen einer Mitnahmeschaltung, ohne das es zu Einschränkungen im Betrieb des Verteilnetzes kommt.

Wird bei der Netzplanung und Simulation nunmehr nicht nur lediglich das bisherige, topologische N-1 Kriterium berücksichtigt, sondern vielmehr darüber hinaus auch die schaltbaren Leistungen der Listen, welche eine zusätzliche Variante im der N-1 Betrachtung bilden kann, kann der Netzausbau mit weniger Betriebsmittel erfolgen.

Ein Kraftwerksfahrplan wird als Eingangsgröße und die Basis für die Netzberechnung genutzt. Sollte es dann zu Überlastungen kommen (N-1), so wird ein kurativer re-dispatch durchgeführt. Für die Systemführung des Übertragungsnetzes kann laufend oder in Intervallen simuliert werden, wie sich Lastflüsse für eine prognostizierte Last auf dem Übertragungsnetz verteilen.Ändert sich die Lastprognose oder kommt es zu einer Verletzung des N-1 Kriteriums, muss bisher gegebenenfalls ein sogenanntes re-dispatch für die Kraftwerksplanung erfolgen, so dass durch Veränderung der Einspeiseleistung der Kraftwerke ein Leistungsfluss auf dem Übertragungsnetz verändert wird. Damit wird die Einhaltung des N-1 Kriteriums weiterhin sichergestellt.

Gegenständlich wird nun als weiterer Freiheitsgrad die schaltbare Leistung innerhalb des Verteilungsnetzes dieser Simulation hinzugefügt. Das heißt, dass ausgehend von einem Fahrplan für zumindest ein Kraftwerk simuliert wird, wie sich die Leistungsflüsse auf dem Übertragungsnetz bei veränderten Lasten verhalten. Für den Fall, dass bei einer veränderten Last oder einem Fehlerfall das N-1 Kriterium verletzt wäre, wird zusätzlich nunmehr die schaltbare Leistung der zumindest einen Liste berücksichtigt. Dadurch wird versucht, dass das Übertragungsnetz, durch Schalten zumindest eines schaltbaren Teilnehmers zumindest einer Liste, die maximale Last tragen kann, ohne ein re-dispatch im Kraftwerksplan durchführen zu müssen. Das heißt, dass gegenständlich simuliert wird, ob bei Ausfall eines Betriebsmittels in dem Übertragungsnetz, durch Schalten zumindest eines schaltbaren Teilnehmers des Verteilnetzes zumindest einer der Liste, der Netzbetrieb des Übertragungsnetzes bei Nennleistung aufrechterhalten bleiben kann, ohne eine Fahrplanänderung für das Kraftwerk vornehmen zu müssen. Somit können Betriebsmittel in dem Übertragungsnetz so ausgelegt werden, dass das Übertragungsnetz nicht stets das N-1 Kriterium einhalten muss, sondern gegebenenfalls weniger stark ausgebaut werden muss, da eine Lastflussverschiebung durch Schalten von Leistungen des Verteilnetzes gemäß der Liste möglich ist.

Gegenständlich wird ein echtzeitfähiges Lastmanagement ermöglicht, bei dem im Fehlerfall, z. B. bei einer Schutzauslösung an einem Betriebsmittel im Übertragungsnetz, in nahezu Echtzeit schaltbare Leistungen in untergelagerten Netzebenen geschaltet werden können, beispielsweise durch eine Mitnahmeschaltung. Durch diese spontane Änderung der Leistungsflüsse, welche nicht durch Betriebsmittel des Übertragungsnetzes bewirkt werden, lässt sich eine Überlastung des Übertragungsnetzes vermeiden und der Netzbetrieb ist sicher gewährleistet. Durch die vorherige, kontinuierliche Berechnung der Listen ist darüber hinaus auch sichergestellt, dass ad-hoc auch kein Problem im Verteilnetz auftritt.

Für die Netzwerkplanung können unterschiedlichste Szenarien simuliert werden. Bei dieser Simulation können die schaltbaren Leistungen der zumindest einen Liste berücksichtigt werden, so dass der Netzausbau weniger Betriebsmittel erfordert, als unter der ausschließlichen Berücksichtigung des N-1 Kriteriums.

Das Übertragungsnetz ist insbesondere ein Höchstspannungsnetz und verbindet Großkraftwerke miteinander. Dabei ist die Spannungsebene des Übertragungsnetzes insbesondere in Europa zwischen 200 kV und 400 kV, in den USA zwischen 700 kV und 800 kV. Eine Grenze zwischen einem Höchstspannungsnetz und einem Hochspannungsnetz kann bei in etwa 200 kV liegen, so dass untergeordnete Netze Spannungsniveaus von U < 200 kV aufweisen. Diese untergeordneten Netze sind zunächst ein Verteilnetz, welches sich in ein Hochspannungsnetz, ein Mittelspannungsnetz und ein Niederspannungsnetz kaskadenförmig aufteilt.

Für die Netzführung des Übertragungsnetzes kann dort drahtlos oder drahtgebunden für jeweils einen Netzübergabepunkt zwischen dem Übertragungsnetz und dem Verteilnetz eine Liste mit zumindest einem schaltbaren Teilnehmer empfangen werden. Teilnehmer sind insbesondere Betriebsmittel innerhalb der Verteilnetze, welche in jeder beliebigen der Spannungsebenen des Verteilnetzes angeordnet sein können, bevorzugt jedoch in der Mittelspannungsebene, beispielsweise Anlagen zur Erzeugung elektrischer Energie aus sogenannten erneuerbaren Energien.

Ein Netzübergabepunkt stellt insbesondere eine Umspannanlage mit einem Leistungstransformator dar, welcher die Spannungsebene der Höchstspannung mit der Spannungsebene der Hochspannung und/oder Mittelspannung verbindet. Für jeweils einen Netzübergabepunkt kann eine Liste mit zumindest einem abschaltbaren Teilnehmer erstellt werden.

Im Rahmen der Planungen eines Kraftwerksfahrplans wurden bisher lediglich Leistungsflüsse auf dem Übertragungsnetz simuliert, welche bei prognostizierten Lasten auftreten. Im Rahmen der Simulation wird überprüft, ob bei Ausfall eines Betriebsmittels unter Einhaltung des Kraftwerksfahrplans die Leistungsflüsse auf den Betriebsmitteln des Übertragungsnetzes deren Nennleistung nicht überschreitet. Bei dieser Überprüfung wird gegenständlich nunmehr zusätzlich berücksichtigt, dass schaltbare Teilnehmer in nachgelagerten Netzebenen in nahezu Echtzeit schaltbar sind. Somit wird für den Ausfall eines Betriebsmittels simuliert, ob durch Schaltmaßnahmen von zumindest einem in einer Liste angegebenen Teilnehmern, die Stabilität des Übertragungsnetzes eingehalten werden kann, insbesondere die Betriebsmittel innerhalb des Übertragungsnetzes nicht über ihre Nennleistung hinaus belastet werden. Dies erfolgt insbesondere im Rahmen einer vorausschauenden Simulation einer prognostizierten Last unter Berücksichtigung des Ausfalls jeweils eines Betriebsmittels. Hierbei wird insbesondere die Simulation für den Ausfall jeweils eines Betriebsmittels über zumindest zwei, vorzugsweise alle Betriebsmittel des Übertragungsnetzes durchgeführt. Für den Ausfall eines der Betriebsmittel wird simuliert, welches Schalten welcher Liste bzw. welcher Leistung einer Liste zu einem optimierten Leistungsfluss führt, ohne die Nennleistung der verbleibenden Betriebsmittel zu überschreiten. Die Liste und/oder die schaltbare Leistung der Liste, welche dazu führt, dass die verbleibenden Betriebsmittel nicht überlastet werden, wird ausgewählt und im Falle eines während des Betriebs tatsächlichen Ausfalls des Betriebsmittel kann auf die ausgewählte Liste und/oder die schaltbare Leistung der ausgewählten Liste zugegriffen werden und ad hoc eine Schaltung der in der Liste angegebenen Teilnehmer bewirkt werden. Hierzu können konkrete Maßnahmen den Betriebsmitteln zugeordnet werden, so dass im Falle eines Leitungsausfalls auf diese Zuordnung direkt zugegriffen werden kann, ohne neu zu rechnen.

Durch die gegenständliche Überprüfung des Fahrplans und die Möglichkeit, einer nahezu Echtzeitansteuerung der schaltbaren Teilnehmer muss das N-1 Kriterium nicht im Vorhinein für jede prognostizierte Last vorliegen, sondern es wird gewährleistet, dass im Fehlerfall eine ad hoc Leistungsänderung durch ad hoc Schalten der schaltbaren Leistungen durchgeführt werden kann. Dies führt dazu, dass ein Ausfall eines Betriebsmittels zu keiner Verletzung der technischen Randbedingungen im betrachteten Netzbereich, als auch im Verteilnetz in dem geschaltet wird, führt.

Für jede Liste kann eine Mindestleistung und eine Maximalleistung der schaltbaren Teilnehmer gemäß einem Ausführungsbeispiel bestimmt werden. Bei der Überprüfung des Fahrplans kann zumindest die Mindestleistung einer jeweiligen Liste berücksichtigt werden. Die Mindestleistung stellt diejenige Leistung dar, die mindestens im Rahmen einer Schaltmaßnahme geschaltet werden kann. Durch Durchführen einer Schaltmaßnahme verändert sich der Leistungsfluss an dem der Liste zugeordnete Netzübergangspunkt entsprechend der geschalteten Leistung der Teilnehmer in den diesem Netzübergabepunkt nachgeordneten Verteilnetz. Dadurch verändert sich auch der Leistungsfluss von und zu dem Netzübergabepunkt, so dass sich die Leistungsflüsse innerhalb des Übertragungsnetzes verändern. Dies kann dazu führen, dass trotz eines Ausfalls eines Betriebsmittels die Netzstabilität gewährleistet bleibt.

Die Liste wird bevorzugt regelmäßig, insbesondere kontinuierlich aktualisiert. Die schaltbaren Teilnehmer und Leistungen innerhalb einer Liste können so ausgewählt sein, dass eine gleichzeitige Schalthandlung auch an allen in der Liste bestimmten Teilnehmern zu keiner Netzinstabilität des jeweiligen Verteilnetzes führt. Das Schalten der Teilnehmer führt in der Regel zu einer abrupten Änderung der Wirkleistungsflüsse in dem jeweiligen Verteilnetz. Da das Verteilnetz bzw. der Verteilnetzbetreiber für die Stabilität seines jeweiligen Netzes selbst zuständig ist, wird durch den Verteilnetzbetreiber die Liste bestimmt und in Abständen, bevorzugt regelmäßig aktualisiert. Der Verteilnetzbetreiber bestimmt somit, wie, wo und was geschaltet werden darf, ohne dass das Verteilnetz zusammenbricht. Der Übertragungsnetzbetreiber braucht im Fehlerfall nur auf die in der Liste angegebenen Teilnehmer zuzugreifen und diese zu Schalten und kann darauf vertrauen, dass das Verteilnetz trotzdem stabil bleibt.

Diese durch den Verteilnetzbetreiber bestimmte Liste kann für jeweils einen Netzübergabepunkt bestimmt werden. An dem Netzübergabepunkt bestimmt sich der Leistungsfluss zwischen dem Übertragungsnetz und dem Verteilnetz. Dieser Leistungsfluss kann durch Schalten der Teilnehmer in der Liste maßgeblich beeinflusst werden. Somit kann ein Einfluss auf das Übertragungsnetz an dem Netzübergabepunkt erfolgen.

Gemäß einem Ausführungsbeispiel wird vorgeschlagen, dass zumindest eine der Listen in jeweils einem Zyklus ausgewählt wird. Ein Zyklus kann ein zeitlicher Abstand, insbesondere ein Intervall sein. Bei der Planung eines Fahrplans für die Kraftwerke werden für bestimmte Zeitintervalle (Zyklus) Lastprognosen vorgenommen und basieren auf diesen Lastprognosen werden die Fahrpläne durch Simulation der Lastflüsse erstellt. Anschließend kann überprüft/simuliert werden, ob bei Ausfall eines jeweiligen Betriebsmittels unter Annahme dieses Fahrplans die Netzstabilität erhalten bleibt oder nicht. Hierbei wird gegenständlich auch die schaltbare Leistung der Teilnehmer berücksichtigt. Wird festgestellt, dass die Netzstabilität durch Schalten von Teilnehmern gemäß zumindest einer Liste aufrechterhalten bleiben kann, wird die entsprechende Liste bestimmt und ausgewählt. Somit ist festgelegt, dass bei Ausfall eines Betriebsmittels Teilnehmer einer bestimmten Liste geschaltet werden. Für den Ausfall jeweils eines Betriebsmittels kann in der Simulation jeweils eine Liste ausgewählt werden, aus der zumindest ein Teilnehmer geschaltet werden soll. Auf diese Auswahl wird im tatsächlichen Fehlerfall des jeweiligen Betriebsmittels unmittelbar zugegriffen. Die dann bewirkte Schalthandlung an dem zumindest einem Teilnehmer verändert den Leistungsfluss am Netzübergabepunkt dann so, dass die Netzstabilität im Übertragungsnetz erhalten bleibt.

Kommt es tatsächlich zum Ausfall des Betriebsmittels, so kann in nahezu Echtzeit auf den Ausfall dieses Betriebsmittels reagiert werden, in dem die Teilnehmer geschaltet werden, welche in der ausgewählten Liste angegeben sind. Das Schalten des/der Teilnehmer kann durch beispielsweise eine Mitnahmeschaltung erfolgen. Da zuvor der Verteilnetzbetreiber sichergestellt hat, dass durch ein Schalten dieser Teilnehmer das Verteilnetz stabil bleibt, führt somit die spontane Schalthandlung auch nicht zu einem Zusammenbruch der Stabilität des nachgeordneten Verteilnetzes.

Gemäß einem Ausführungsbeispiel wird vorgeschlagen, dass in einer Liste nur eine einzelne Maßnahmenstufe berücksichtigt ist, das heißt, entweder eine Leistungserhöhung oder eine Leistungsabsenkung der Teilnehmer, beispielsweise Erzeugungsanlagen oder Batterien. Eine Kombination dieser Schalthandlungen als ad hoc Maßnahme, sind möglich. Auch ist es möglich eine dieser beiden Schalthandlungen mit weiteren Maßnahmenstufen, wie beispielsweise Transformatorstufung oder Änderung von Schaltzuständen, zu kombinieren.
In einem Intervall (Zyklus) kann laufend bevorzugt ein Maximalwert einer möglichen Leistungsänderung durch den Verteilnetzbetreiber berechnet werden, indem die Teilnehmer bestimmt werden können, die in einem Verteilnetz gleichzeitig geschaltet werden können, ohne dass es zu einer Verletzung der technischen Randbedingungen im betrachteten Verteilnetz kommt. Da sich auch im Verteilnetz durch veränderte Lasten Lastflüsse verändern, verändern sich auch die jeweiligen Teilnehmer, die der Liste hinzugefügt werden, abhängig von der Lastprognose innerhalb des Verteilnetzes. Das heißt, dass die Liste laufend aktualisiert wird und die Netzführung des Übertragungsnetzes jeweils auf die laufende Aktualisierung zugreifen muss.

Wird in einer Simulation festgestellt, dass bei einem Ausfall zumindest eines Betriebsmittels die Sicherheit des Übertragungsnetzes trotz einer Schalthandlung an den Teilnehmern der Liste gefährdet ist, kann gegebenenfalls, aber auch erst dann, ein Kraftwerks re-dispatch erfolgen, um durch Veränderung des Kraftwerksfahrplans eine Leistungsflussänderung in dem Übertragungsnetz zu bewirken.

Der Ausfall eines Betriebsmittels in dem Übertragungsnetz hat spezifische Auswirkungen auf Leistungsflüsse innerhalb des Übertragungsnetzes. Jedes Betriebsmittel hat eine andere Auswirkung auf die Veränderung der Leistungsflüsse. Aus diesem Grunde wird gemäß einem Ausführungsbeispiel vorgeschlagen, dass für jeweils eines von zumindest zwei Betriebsmitteln des Übertragungsnetzes zumindest jeweils eine Liste pro Zyklus ausgewählt wird. Das heißt, dass simuliert wird, wie sich die Leistungsflüsse bei Ausfall eines bestimmten Betriebsmittels auf dem Übertragungsnetz verändern. Anschließend wird für den Ausfall dieses Betriebsmittels simuliert, auf welche Listen oder Teilnehmer einer Liste zurückgegriffen werden muss um die Netzstabilität aufrecht zu erhalten. Die Auswahl dieser zumindest einen Liste kann pro simulierten Ausfall eines bestimmten Betriebsmittels erfolgen und insbesondere auch für jeden einzelnen Zyklus neu.

Teilnehmer einer Liste sind potenziell in der Lage ad-hoc ausgeschaltet zu werden. Tritt der Störfall ein, also fällt ein Betriebsmittel aus, kann unmittelbar die Schalthandlung an den zuvor bestimmten Teilnehmern der für das ausgefallene Betriebsmittel ausgewählten Liste durchgeführt. werden.

Da die Netzsicherheit oberste Priorität hat, ist es notwendig, dass eine Schalthandlung auch tatsächlich im Störfall durchgeführt wird. Das Auslösen der Schalthandlung erfolgt über drahtlose oder drahtgebundene Kommunikationswege. Die schaltbaren Teilnehmer müssen daher verfügbar sein. Somit wird gemäß einem Ausführungsbeispiel überprüft, ob die Kommunikationsfähigkeit eines Teilnehmers gegeben ist. Dies kann vor jedem Zyklus neu erfolgen. Bei einer instabilen Kommunikationsverbindung kann der jeweilige Teilnehmer aus der Liste entfernt oder als nicht benutzbar gekennzeichnet werden. Die Leistung dieses Teilnehmers als schaltbare Leistung wird in der Liste nicht mehr berücksichtigt und es erfolgt auch keine Schalthandlung an diesem Teilnehmer, falls es zu einem Störfall kommt.

Damit der Übertragungsnetzbetreiber auch sicherstellen kann, dass die Netzstabilität gewährleistet ist, wenn er eine Schalthandlung an Teilnehmern einer Liste ausgelöst hat, wird vorgeschlagen, dass die schaltbaren Teilnehmer im Falle einer Schaltung die Schaltung an das Übertragungsnetz bestätigt.

Ein Schalten eines Teilnehmers kann ein Ein- oder Abschalten sein. Dies gilt sowohl für eine Last als auch für einen Einspeiser.

Ein kaskadiertes Netz von schaltbaren Teilnehmern ist ebenfalls denkbar. Dabei kann einem schaltbaren Teilnehmer zumindest ein nachgelagerter schaltbarer Teilnehmer zugeordnet sein. In dieser Kaskade können zunächst die schaltbaren Teilnehmer mit höheren Leistungen angegeben sein und nachgeordnet können beispielsweise zwei oder mehr Teilnehmer mit geringerer Leistung sein, deren schaltbare Leistung in Summe einer Leistung des vorgelagerten Teilnehmers entspricht. Eine solche Kaskade von schaltbaren Teilnehmern in der Liste ermöglicht es, eine Schalthandlung beispielsweise bei Ausfall einer Kommunikationsverbindung mit einem vorgelagerten Teilnehmer über die nachgelagerten Teilnehmer vorzunehmen.

Wie bereits erläutert, wird überprüft, ob der Fahrplan der Kraftwerke derart ist, dass bei der prognostizierten Last bei Ausfall eines Betriebsmittels das Netz stabil ist, wenn die schaltbaren Leistungen einer Liste geschaltet werden. Stellt sich heraus, dass bei dieser Überprüfung die zusätzlich schaltbare Leistung der zumindest einer Liste nicht ausreicht, das Übertragungsnetz stabil zu halten, kann ein neuer Fahrplan für die Kraftwerke bestimmt werden. Für die Bestimmung dieses neuen Fahrplans kann die angebotene schaltbare Leistung der Listen berücksichtigt werden, wobei eine Leistungsflussveränderung jedoch zusätzlich durch ein re-dispatch der Kraftwerke erfolgen kann.

Für jeden Teilnehmer einer Liste kann eine schaltbare Leistung definiert sein. Darüber hinaus kann für jeden Teilnehmer einer Liste eine Kommunikationsadresse definiert sein. Die Kommunikationsadresse kann beispielsweise eine statische IP-Adresse sein, über die das Übertragungsnetz eine Schalthandlung an dem Teilnehmer auslösen kann.

Wie bereits erläutert, sind die schaltbaren Teilnehmer ausschließlich Teilnehmer des nachgelagerten Verteilnetzes. Dabei können die Teilnehmer im Hochspannungsnetz, Mittelspannungsnetz als auch im Niederspannungsnetz angeordnet sein. Für eine spürbare Leistungsflussveränderung im Übertragungsnetz sind die Teilnehmer jedoch bevorzugt im Hochspannungs- und Mittelspannungsnetz angeordnet, da solche Teilnehmer erheblich höhere schaltbare Leistungen haben, als Teilnehmer im Niederspannungsnetz.

Innerhalb eines Verteilnetzes werden gemäß einem Ausführungsbeispiel nur solche Teilnehmer bestimmt, bei denen ein gleichzeitiges Schalten die Stabilität des Verteilnetzes nicht beeinträchtigt. Nur solche Teilnehmer werden der Liste hinzugefügt. Dabei wird stets berücksichtigt, dass im Falle eines Schaltens alle Teilnehmer der Liste gleichzeitig gemeinsam geschaltet werden. Auch in einem solchen Fall muss das Verteilnetz stabil bleiben. Für jedes Verteilnetz wird die Liste eigenständig bestimmt. Jedes Verteilnetz muss unabhängig von einem anderen Verteilnetz beim Schalten der in der Liste angegebenen Teilnehmer stabil bleiben.

Im Falle des Ausfalls eines Betriebsmittels muss das Übertragungsnetz sehr schnell in einen stabilen Zustand gebracht werden. Daher erfolgt das Schalten der Teilnehmer bevorzugt in Echtzeit, getriggert durch das Übertragungsnetz.

Gemäß einem Ausführungsbeispiel wird vorgeschlagen, dass die schaltbare Leistung der Teilnehmer eine Wirkleistung ist.

Nachfolgend wird der Gegenstand anhand einer Ausführungsbeispiele zeigenden Zeichnung näher erläutert. In der Zeichnung zeigen:
- Fig. 1: ein Stromnetz mit daran angeschlossenen Teilnehmern;
- Fig. 2: die Vermaschung eines Übertragungsnetzes mit Betriebsmitteln;
- Fig. 3: eine Anzahl an Listen für jeweils einen Netzübergabepunkt;
- Fig. 4: eine Kaskade schaltbarer Teilnehmer

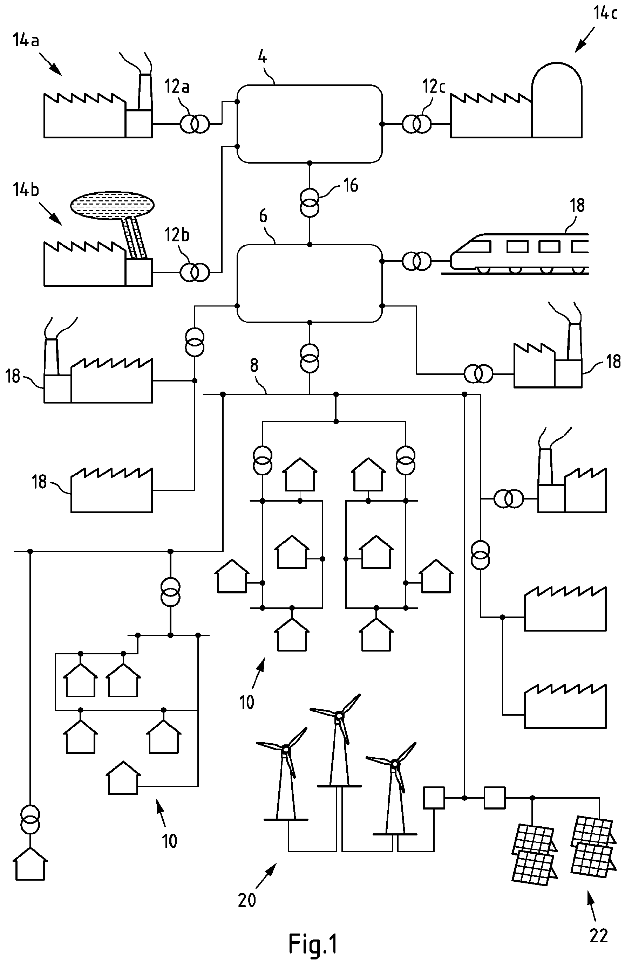

Fig. 1 zeigt ein Stromnetz 2 mit einem Übertragungsnetz 4, einem Hochspannungsnetz 6, einem Mittelspannungsnetz 8 sowie an das Mittelspannungsnetz angeordnete Niederspannungsnetze 10.

Das Übertragungsnetz 4 ist als Höchstspannungsnetz insbesondere ein vermaschtes Netz. Über Leistungstransformatoren 12a-c sind Kraftwerke 14a-c an das Übertragungsnetz 4 angeschlossen. Das Übertragungsnetz 4 ist über Netzübergabepunkte 16, die insbesondere Leistungstransformatoren sind, mit jeweils einem Hochspannungsnetz 6 verbunden. Im europäischen Netzverbund ist ein Übertragungsnetz 4 mit einer Mehrzahl an Hochspannungsnetzen 6 verbunden, welche ihrerseits wiederum mit einer Mehrzahl an Mittelspannungsnetzen 8 und diese mit einer Mehrzahl von Niederspannungsnetzen 10 gekoppelt sind.

Innerhalb der nachgelagerten Netze 6, 8, 10 sind Teilnehmer 18 angeschlossen, die als Lasten oder Einspeiser betrieben sind. So können beispielsweise industrielle Kraftwerke und industrielle Abnehmer als Teilnehmer am Hochspannungsnetz 6 angeschlossen sein. Windparks 20 sowie Photovoltaikfelder 22, welche beide ihrerseits auch Teilnehmer sind, können über das Mittelspannungsnetz 8 angeschlossen sein.

Der Betreiber des Übertragungsnetzes 4 ist für die Netzstabilität dieses Übertragungsnetzes 4 verantwortlich.

Innerhalb des Verteilnetzes mit den Netzen 6, 8, 10 ist dem jeweiligen Verteilnetzbetreiber bekannt, welche der Teilnehmer 18, 20, 22 gleichzeitig ein- oder ausgeschaltet werden können, ohne dass die jeweilige Netzebene instabil wird. Diese Kenntnis innerhalb des Verteilnetzes wird gegenständlich genutzt, um das Übertragungsnetz 4 stabil zu halten.

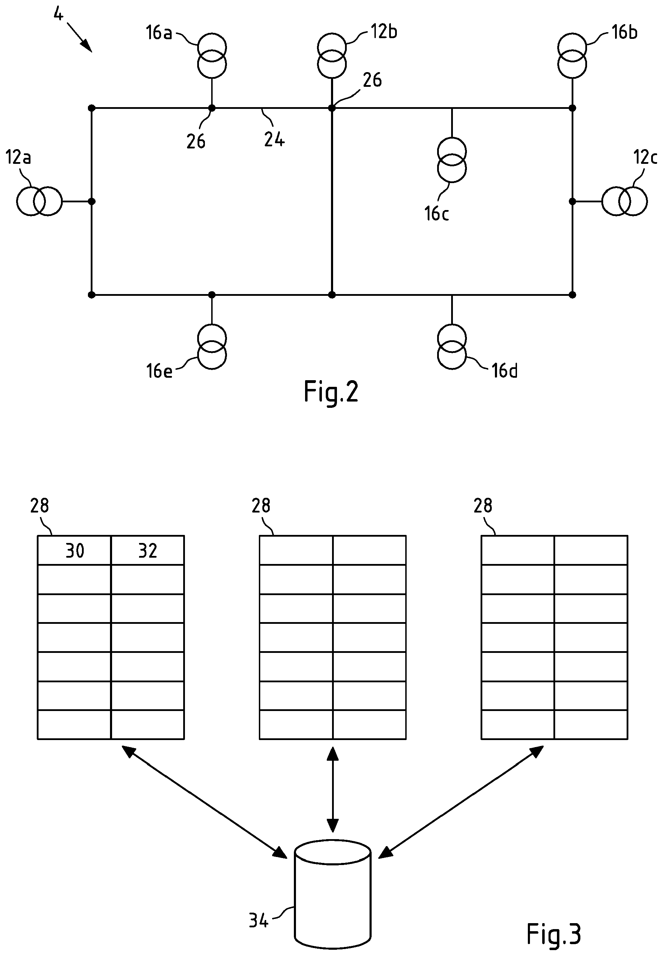

Fig. 2 zeigt in einer stark schematisierten Form ein Übertragungsnetz 4 als vermaschtes Netz. Über die Transformatoren 12a-c sind die Kraftwerke 14 an das Übertragungsnetz 4 gekoppelt. Innerhalb des Übertragungsnetzes 4 können Betriebsmittel, beispielsweise einzelne Leitungen 24 zwischen Netzknoten 26 angeordnet werden. Die Netzknoten 26 können als Umspannanlage ebenfalls Betriebsmittel des Übertragungsnetzes 4 sein. An das Übertragungsnetz 4 können Netzübergabepunkte in Form von Transformatoren 16a-e angeschlossen sein. Jeder der Transformatoren 16a-e koppelt das Übertragungsnetz 4 mit jeweils einem nachgeordneten Verteilnetz, insbesondere zunächst einem Hochspannungsnetz 6 mit nachgeordneten Netzen 8, 10.

An jedem Netzübergabepunkt 16 wird von dem nachgeordneten Verteilnetz eine Liste 28 zur Verfügung gestellt. In dieser Liste 28 sind, wie in Fig. 3 gezeigt einzelne Teilnehmer mit ihrer jeweiligen schaltbaren Leistung 30 und einer Teilnehmeradresse 32 vorgesehen. Diese Listen 28 werden laufend aktualisiert für jeweils einen Netzübergabepunkt 16 zur Verfügung gestellt.

Die Listen 28 enthalten solche Teilnehmer 18, 20, 22, die gleichzeitig geschaltet werden können, ohne dass das jeweilige Verteilnetz 6, 8, 10 instabil wird. Diese Berechnung, welche der Teilnehmer 18, 20, 22 in der Liste 28 am Netzübergabepunkt 16 zur Verfügung gestellt wird, erfolgt durch die Netzführung des Verteilnetzes. Die Netzführung des Übertragungsnetzes 4 empfängt in einem zentralen Rechner 34 die Listen 28 der einzelnen Netzübergabepunkte 16.

Zur Netzführung des Übertragungsnetzes 4 wird zunächst eine Lastprognose aufgestellt. Anschließend wird für diese Lastprognose ein Fahrplan für ein jeweiliges Kraftwerk 14 erstellt, so dass bei diesem Fahrplan die Leistungsflüsse auf den Betriebsmitteln 24, 26 des Übertragungsnetzes 4 deren Nennleistung nicht überschreitet.

Anschließend wird überprüft, ob bei jeweils Ausfall eines der Betriebsmittel 24, 26 die weiteren Betriebsmittel 24, 26 des Übertragungsnetzes 4 dauerhaft stabil arbeiten können, insbesondere ob der veränderte Leistungsfluss in dem vermaschten Netz zu Bedingungen an einzelnen Betriebsmitteln führt, bei denen diese über 100% ihrer Nennleistung betrieben werden müssten. Für den Fall, dass bei einer solchen Simulation festgestellt wird, dass bei Ausfall eines Betriebsmittels 24, 26 zumindest ein anderes Betriebsmittel 24, 26 überlastet wäre, wäre herkömmlicherweise eine Verletzung des N-1 Kriteriums festzustellen und ein Kraftwerks re-dispatch durchzuführen. Wäre im Rahmen eines Kraftwerks re-dispatch, also eines neuen Fahrplans der Kraftwerke 14a-c der Leistungsbedarf nicht mehr zu befriedigen oder das N-1 Kriterium nicht erfüllt, müsste zwingend ein Netzausbau erfolgen.

Gegenständlich wird nun vorgeschlagen, dass bei der Simulation der Leistungsflüsse bei Ausfall eines der Betriebsmittel 24, 26 die schaltbaren Leistungen der Listen 28 berücksichtigt werden. Daher wird vorgeschlagen, dass für jeweils ein Betriebsmittel 24, 26 dessen Ausfall simuliert wird. Basierend auf dem für die Lastprognose bestimmten Fahrplan für die Kraftwerke 14 wird überprüft, ob unter zusätzlicher Schaltung von Teilnehmern 18, 20, 22 einer oder mehrerer Listen 28 die Netzstabilität aufrechterhalten bleiben kann, also kein Betriebsmittel 24, 26 oberhalb seiner Nennleistung betrieben werden muss. Ist dies der Fall, so kann ohne weiteren Netzausbau das Übertragungsnetz 4 betrieben werden.

Kommt es im tatsächlichen Betrieb bei einem vorgegebenen Fahrplan der Kraftwerke 14a-c zu einem Ausfall eines Betriebsmittels 24, 26, so wird unmittelbar auf diejenigen Liste(n) 28 zurückgegriffen, die bei der Simulation für den Ausfall des betreffenden Betriebsmittels 24, 26 ausgewählt wurde(n). In einer nahezu Echtzeitsteuerung werden dann die Teilnehmer 18, 20, 22 in den ausgewählten Listen 28 entsprechend ihrer Leistung 30 geschaltet, insbesondere ein- oder ausgeschaltet. Dabei erfolgt eine Kommunikation mit den Teilnehmern 18, 20, 22 über die in der Liste 28 hinterlegte Adresse 32. Die Kommunikation findet unmittelbar vom Server 34 unter Verwendung der Adresse 32 mit den Teilnehmern 18, 20, 22 statt, so dass diese unmittelbar ohne Zwischenschaltung einer weiteren Instanz schalten können. Der Server kann auch Teil des Netzleitsystems des Übertragungsnetzbetreibers sein.

Dieses Schalten führt dazu, dass trotz eines Ausfalls eines Betriebsmittels 24, 26 unter Beibehaltung eines bestehenden Fahrplans der Kraftwerke 14a-c die Stabilität des Übertragungsnetzes 4 erhalten bleibt.

Es kann dazu kommen, dass einzelne Teilnehmer 18, 20, 22 eventuell Kommunikationsprobleme haben. Um für einen Teilnehmer 18, 20, 22 dessen schaltbare Leistung 30 bereitzustellen, kann eine Kaskade von Teilnehmern 18, 20, 22 für jeden Teilnehmer 18, 20, 22 hinterlegt sein.

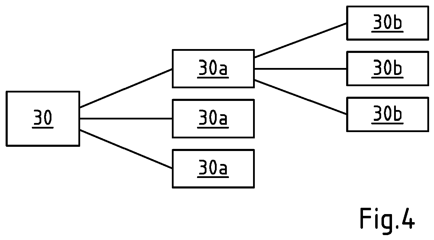

So zeigt Fig. 4 beispielsweise das für eine Leistung 30 eines Teilnehmers 18, 20, 22 drei weitere Leistungen 30a von anderen Teilnehmern 18, 20, 22 hinterlegt werden, die zusammen die Leistung 30 ergeben. Ist nun eine Störung der Kommunikation zwischen dem ersten in der Liste 28 hinterlegten Teilnehmer 18, 20, 22 festgestellt, so kann unmittelbar auf die in der Kaskade nachgeordneten Teilnehmer 18, 20, 22 mit der Leistung 30a zurückgegriffen werden und diese können geschaltet werden. Die Kaskade kann weitere Hierarchieebenen aufweisen, so dass auch für nachgeordnete Leistungen 30a erneut nachgeordnete Leistungen 30b hinterlegt sein können, die einzelnen Teilnehmern 18, 20, 22 zugeordnet sind.

Durch die kontinuierlich vorausschauende Berechnung sicher schaltbarer Leistungen wird der Freiheitsgrad für die Bestimmung der Netzstabilität des Übertragungsnetzes 4 gegenständlich erhöht, ohne zusätzliche Betriebsmittel im Übertragungsnetz 4 vorsehen zu müssen.

### Bezugszeichenliste

- 2: Stromnetz
- 4: Übertragungsnetz
- 6: Hochspannungsnetz
- 8: Mittelspannungsnetz
- 10: Niederspannungsnetz
- 12: Transformator
- 14: Kraftwerk
- 16: Netzübergabepunkt
- 18: Teilnehmer
- 20: Windpark
- 22: PV-Feld
- 24: Leitung
- 26: Netzknoten
- 28: Liste
- 30: Leistung
- 32: Adresse
- 34: Server

## Patentansprüche

1. Verfahren zum Betreiben eines elektrischen Übertragungsnetzes, insbesondere eines Höchstspannungsnetzes mit den Schritten,
- Empfangen jeweils einer Liste mit zumindest einem schaltbaren Teilnehmer von zumindest einem Verteilnetz für einen Netzübergabepunkt zwischen dem Verteilnetz und dem Übertragungsnetz, wobei einer jeweiligen Liste eine schaltbare elektrische Leistung zugeordnet ist,
- Überprüfen eines Fahrplans für zumindest ein an das Übertragungsnetz angeschlossenes Kraftwerk, wobei ein n-1 Kriteriums für das Übertragungsnetz um die schaltbare Leistung der zumindest einen Liste ergänzt ist.

2. Verfahren nach Anspruch 1,
**dadurch gekennzeichnet,**
- **dass** für jeweils eine Liste eine Mindestleistung und eine Maximalleistung der schaltbaren Teilnehmer bestimmt sind und dass die Überprüfung des Fahrplans abhängig von zumindest der Mindestleistung einer jeweiligen Liste ist.

3. Verfahren nach Anspruch 1 oder 2,
**dadurch gekennzeichnet,**
- **dass** die jeweilige Liste durch das Verteilnetz bestimmt wird, insbesondere- dass jeweils für einen Netzübergabepunkt jeweils eine Liste erstellt wird.

4. Verfahren nach einem der vorangehenden Ansprüche,
**dadurch gekennzeichnet,**
- **dass** zumindest eine der Listen in jedem Zyklus ausgewählt wird, deren schaltbaren Teilnehmer bei einem Ausfall eines Betriebsmittels geschaltet werden.

5. Verfahren nach einem der vorangehenden Ansprüche,
**dadurch gekennzeichnet,**
- **dass** reaktiv bei einem Ausfall eines Betriebsmittels der zumindest eine schaltbare Teilnehmer der Liste geschaltet wird.

6. Verfahren nach einem der vorangehenden Ansprüche,
**dadurch gekennzeichnet,**
- **dass** in einer jeweiligen Liste die schaltbaren Teilnehmer entweder gemeinsam Lasten oder gemeinsam Einspeiser sind, und/oder- dass die Liste zyklisch aktualisiert wird und das Überprüfen für jeden Zyklus neu erfolgt.

7. Verfahren nach einem der vorangehenden Ansprüche,
**dadurch gekennzeichnet,**
- **dass** für jeweils eines von zumindest zwei Betriebsmitteln des Übertragungsnetzes zumindest jeweils eine Liste pro Zyklus ausgewählt wird, deren schaltbaren Teilnehmer bei einem Ausfall des jeweiligen Betriebsmittels geschaltet werden.

8. Verfahren nach einem der vorangehenden Ansprüche,
**dadurch gekennzeichnet,**
- **dass** für jeden schaltbaren Teilnehmer in einer Liste eine Kommunikationsfähigkeit geprüft wird und dass der Teilnehmer nur dann der Liste hinzugefügt wird, wenn innerhalb eines Zyklus eine Kommunikation mit dem Teilnehmer sichergestellt ist.

9. Verfahren nach einem der vorangehenden Ansprüche,
**dadurch gekennzeichnet,**
- **dass** ein schaltbarer Teilnehmer im Falle seiner Abschaltung die Abschaltung an das Übertragungsnetz bestätigt, und/oder- dass für zumindest einen der schaltbaren Teilnehmer diesem nachgelagerte schaltbare Teilnehmer bestimmt werden, welches geschaltet werden, wenn der schaltbare Teilnehmer in einem Zyklus nicht schaltbar ist.

10. Verfahren nach einem der vorangehenden Ansprüche,
**dadurch gekennzeichnet,**
- **dass** für den Fall, dass das Überprüfen des Fahrplans unter Berücksichtigung des n-1 Kriteriums und zusätzlich der schaltbaren Leistung der zumindest einen Liste festgestellt wird, dass das Übertragungsnetz bei einem Ausfall eines Betriebsmittels weniger als 100% seiner Nennleistung übertragen kann, ein neuer Fahrplan unter Berücksichtigung des n-1 Kriteriums und zusätzlich der schaltbaren Leistung der zumindest einen Liste berechnet wird.

11. Verfahren nach einem der vorangehenden Ansprüche,
**dadurch gekennzeichnet,**
- **dass** in der Liste für jeden Teilnehmer eine dem Teilnehmer zugeordnete Leistung bestimmt wird.

12. Verfahren nach einem der vorangehenden Ansprüche,
**dadurch gekennzeichnet,**
- **dass** in der Liste für jeden Teilnehmer eine dem Teilnehmer zugeordnete Kommunikationsadresse bestimmt wird.

13. Verfahren nach einem der vorangehenden Ansprüche,
**dadurch gekennzeichnet,**
- **dass** alle schaltbaren Teilnehmer am Verteilnetz angeschlossen sind.

14. Verfahren nach einem der vorangehenden Ansprüche,
**dadurch gekennzeichnet,**
- **dass** die Teilnehmer in einem Verteilnetz bestimmt werden, deren Schaltung die Netzstabilität des Verteilnetzes nicht beeinträchtigt und anschließend nur so bestimmte Teilnehmer der Liste hinzugefügt werden.

15. Verfahren nach einem der vorangehenden Ansprüche,
**dadurch gekennzeichnet,**
- **dass** die Liste für jeweils ein Verteilnetz unabhängig von einem benachbarten Teilnetz und/oder dem übergelagerten Übertragungsnetz bestimmt wird, und/oder
- **dass** für jeweils ein Verteilnetz nur eine solche Anzahl an Teilnehmern in die Liste aufgenommen wird, bei der eine gleichzeitige Schaltung aller in der Liste aufgenommenen Teilnehmer das Verteilnetz stabil bleibt.
